# FASCICULE DE BREVET EUROPEEN

(11) **EP 1 030 792 B1**
(45) Date de publication et mention de la délivrance du brevet: **05.03.2003**
(21) Numéro de dépôt: 98955696.4
(22) Date de dépôt: 19.11.1998
(51) Int. Cl.: B60K 35/00, G01D 11/26

(54) **TABLEAU DE BORD POUR VEHICULE AUTOMOBILE**
ARMATURENBRETT FÜR KRAFTFAHRZEUGE
MOTOR VEHICLE DASHBOARD

(30) Priorité: 21.11.1997 FR 9714634
(43) Date de publication de la demande: 30.08.2000
(73) Titulaire: MAGNETI MARELLI FRANCE, F-92000 Nanterre (FR)
(72) Inventeur: LAZAREFF, André, F-58300 ST LEGER LES VIGNES (FR); GRANGER, Jacques, F-78400 Chatou (FR)
(74) Mandataire: Texier, Christian
(86) Numéro de dépôt international: FR9802472
(87) Numéro de publication internationale: WO99026805

(56) Documents cités:
- EP-A- 0 676 307
- DE-A- 4 230 760
- DE-U- 9 004 991

## Description

La présente invention concerne le domaine des tableaux de bord pour véhicules automobiles.

On a déjà proposé de nombreuses architectures pour tableaux de bord de véhicules automobiles.

Sur ce point, on pourra se référer par exemple aux documents EP-A-0676307, DE-A-4230760.

Généralement les tableaux de bord pour véhicule automobile comprennent un élément de boîtier, une vitre avant et des moyens de fixation de la vitre avant sur l'élément de boîtier.

La Demanderesse a proposé de réaliser l'élément de boîtier en un matériau plastique souple, par exemple en polypropylène chargé élastomère. L'intérêt premier d'un tel matériau est d'accepter de manière fiable et durable des revêtements tels que des peintures. Cependant ce matériau présente l'inconvénient, lié à sa souplesse intrinsèque, de conduire à un tableau de bord possédant peu de rigidité, et par conséquent à une tenue de la vitre avant qui laisse à désirer.

La présente invention a pour but de perfectionner les moyens connus conçus pour la fixation d'une vitre avant de tableau de bord sur un boîtier ou une pièce d'habillage.

Ce but est atteint dans le cadre de la présente invention grâce à un tableau de bord du type défini en revendication 1 annexée.

Selon une variante avantageuse de l'invention, les nervures en saillie sont prévues sur la surface arrière de la vitre avant, tandis que les gorges complémentaires sont ménagées sur la périphérie d'une jupe de l'élément de boîtier.

Comme on l'exposera par la suite, la Demanderesse a constaté que la coopération entre les nervures et les gorges précitées permettait d'obtenir un tableau de bord de rigidité acceptable, malgré la souplesse du matériau composant l'élément de boîtier.

D'autres caractéristiques, buts et avantages de la présente invention apparaitront à la lecture de la description détaillée qui va suivre et en regard des dessins annexés, donnés à titre d'exemple non limitatif et sur lesquels :
- la figure 1 représente une vue schématique en coupe transversale d'une vitre avant et d'un élément de boîtier conformes à la présente invention, avant assemblage,
- la figure 2 représente les mêmes éléments dans une phase intermédiaire d'assemblage,
- la figure 3 représente les mêmes éléments en position d'assemblage,
- la figure 4 représente un exemple de réalisation de structure de clipsage utilisée dans le cadre de la présente invention,

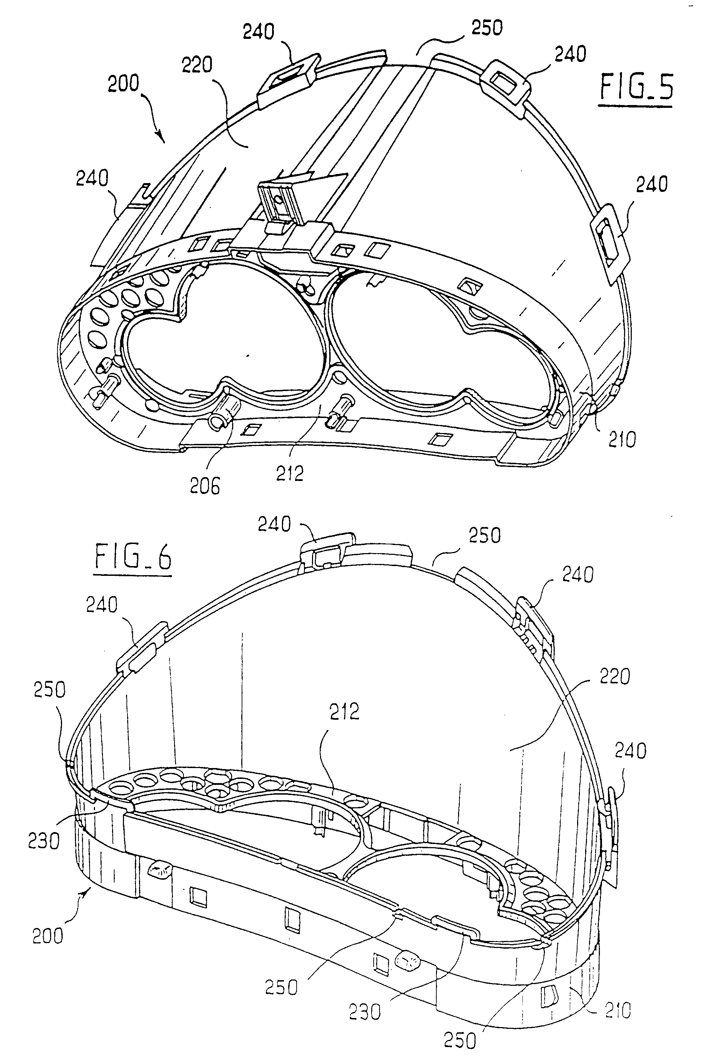

- les figures 5 et 6 représentent des vues en perspective d'un élément de boîtier d'un tableau de bord conforme à la présente invention,

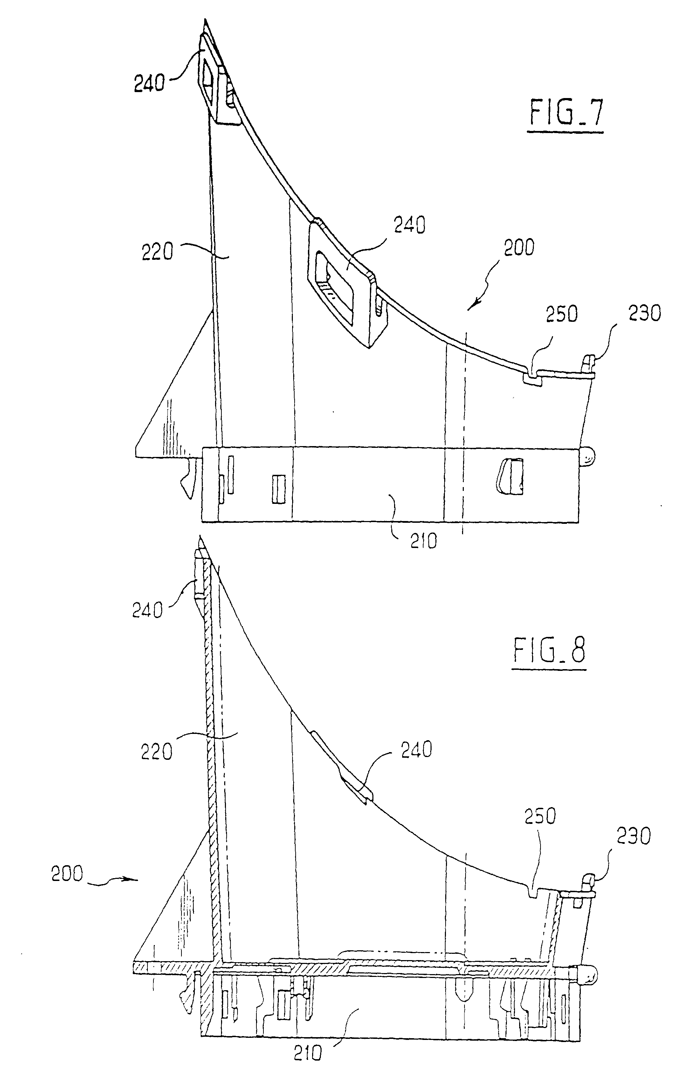

- les figures 7 et 8 représentent respectivement des vues latérale externe et en coupe verticale de cet élément de boîtier,
- les figures 9, 10 et 11 représentent respectivement des vues en perspective, latérale et en coupe d'une vitre avant conforme à la présente invention, et

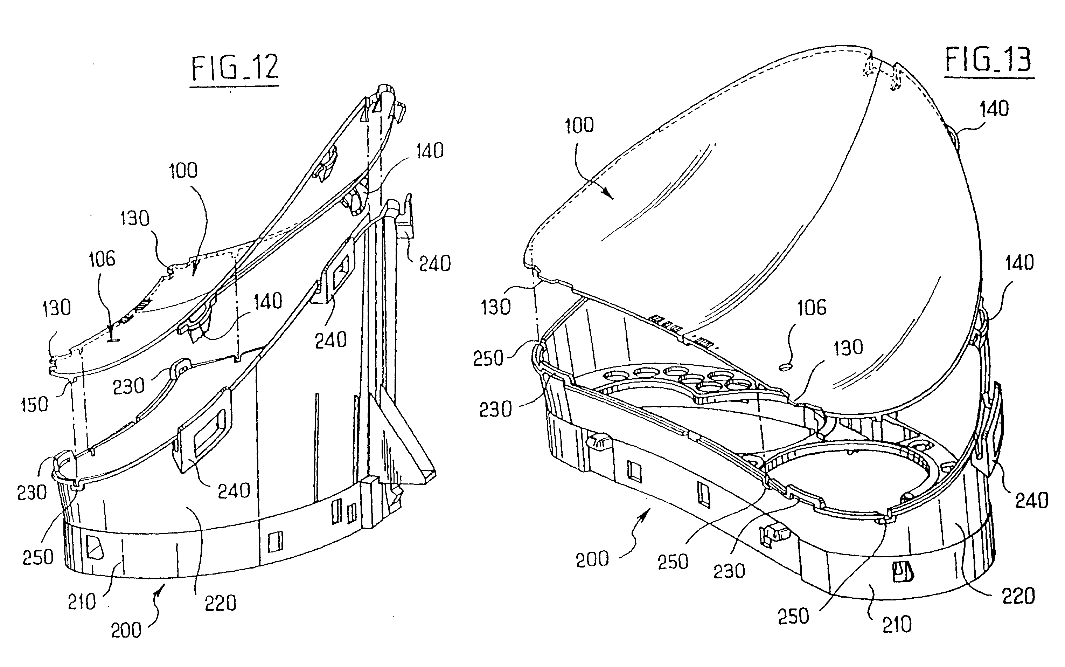

- les figures 12 et 13 représentent deux vues en perspective d'un tableau de bord conforme à la présente invention, à un stade intermédiaire de l'assemblage de la vitre avant sur l'élément de boîtier.

On a illustré sur les figures annexées les éléments de base d'un tableau de bord conforme à la présente invention, à savoir une vitre avant 100 et un élément de boîtier 200.

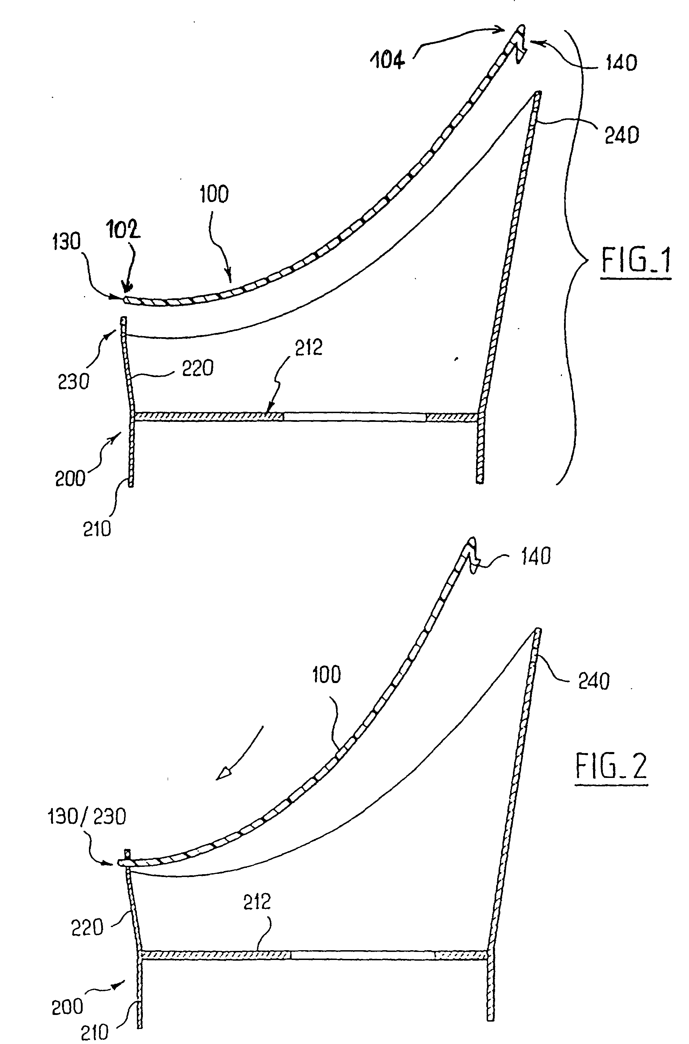

Sur les figures 1 à 3 annexées la vitre avant 100 et l'élément de boîtier 200 ne sont pas représentés dans le détail. Sur ces figures 1 à 3 annexées on s'est attaché à illustrer uniquement les moyens de cette vitre avant 100 et de l'élément de boîtier 200 spécifiques de la présente invention.

Par ailleurs la représentation de ces éléments 100 et 200 donnée sur les figures annexées n'est donnée qu'à titre d'illustration non limitative, ces éléments étant susceptible de faire l'objet d'un grand nombre de variantes de réalisation, sans sortir du cadre défini dans les revendications annexées.

Pour l'essentiel la vitre avant 100 est formée d'une plaque en matériau plastique optiquement transparent, de contour général oval, concave vers l'avant, c'est à dire vers l'extérieur du boîtier 200.

La vitre avant 100 peut être réalisée par exemple en polymétacrylate de méthyle.

Le boîtier 200 comporte quant à lui un caisson 210 globalement parallélépipédique surmonté vers l'avant d'une jupe périphérique 220 de hauteur variable. Une telle jupe 220 est généralement dénommée "réhaut" du fait qu'elle a pour fonction principale de rehausser la vitre 100 par rapport à la face avant du caisson 210. En général la jupe 220 possède sa plus grande hauteur en partie supérieure du boîtier 200. Ainsi la jupe 220 évolue progressivement en hauteur, entre sa partie supérieure de plus grande extension, et sa partie inférieure de plus faible extension. La jupe 220 tient lieu également dans ce cas de pare-soleil.

Le caisson 210 a pour fonction de loger les divers moyens indicateurs à aiguilles et/ou témoins lumineux ainsi que leurs moyens de commande. Il supporte généralement sur sa face avant un cadran associé.

A cette fin le caisson 210 comporte généralement au moins une cloison 212 qui s'étend transversalement à la jupe 220.

Le caisson 210 peut en lui même faire l'objet de nombreux modes de réalisation. A titre d'exemple non limitatif, le caisson 210 peut être obturé ou non à l'arrière par une couvercle séparé et rapporté, ou encore à l'aide d'un élément articulé au moulage sur la bordure de la jupe 220.

Comme on l'a indiqué précédemment dans le cadre de la présente invention, les moyens de fixation de la vitre avant 100 sur le boîtier 200 comprennent d'une part des moyens 130/230 d'accrochage d'un premier bord 102 de la vitre avant 100 sur l'élément de boîtier 200 et d'autre part des moyens 140/240 de clipsage du bord opposé 104 de la vitre avant 100 sur ledit élément de boîtier 200.

De préférence les moyens d'accrochage 130/230 sont prévus en partie inférieure du tableau de bord, c'est à dire au niveau de la portion de la jupe 220 possédant sa plus faible hauteur.

Inversement les moyens de clipsage 140/240 sont prévus en partie supérieure du tableau de bord, c'est à dire au niveau de la portion de la jupe 220 possédant sa plus grande hauteur.

Les structures d'accrochage sont de préférence formées d'une ouverture 230 dans le bord avant de la jupe et d'une saillie complémentaire 130 formée sur la bordure de la vitre avant 100.

Selon un mode de réalisation préférentiel de la présente invention, il est ainsi prévu deux structures d'accrochage 130/230, respectivement à proximité des extrémités de la bordure inférieure du tableau de bord.

Les moyens de clipsage 140, 240 sont de préférence formés d'une boucle 240 sur la bordure de la jupe 220 et d'une denture élastique complémentaire 140 sur la périphérie de la vitre avant 100.

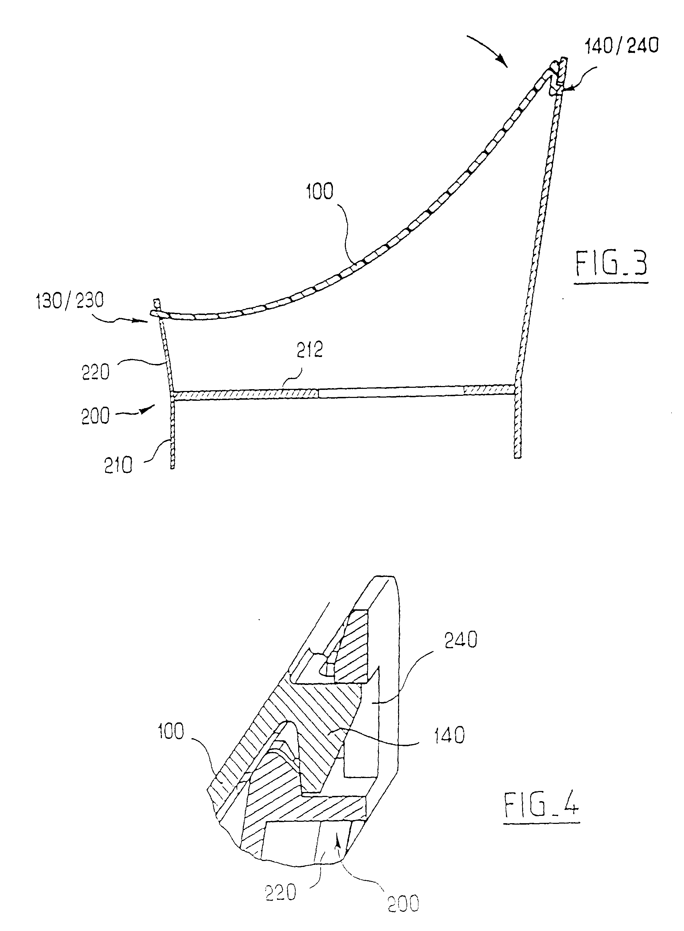

On a illustré sur la figure 4 un exemple de réalisation non limitatif d'une telle structure de clipsage.

Selon un mode de réalisation préférentiel de la présente invention, il est ainsi prévu quatre structures de clipsage 140, 240 sensiblement équiréparties sur la bordure supérieure du tableau de bord et en partie supérieure des bordures latérales de celui-ci.

Plus précisément encore selon un mode de réalisation préférentiel de la présente invention, le boîtier 200 est réalisé à l'aide de polypropylène chargé élastomère, par exemple à 50%, ou d'un matériau souple équivalent.

Un tel boîtier 200 en polypropylène chargé élastomère présente en particulier l'avantage de permettre un revêtement stable dans le temps à l'aide d'une peinture, et par conséquent une grande latitude pour l'habillage du tableau de bord

Cependant comme indiqué précédemment, dans ce contexte, il est prévu un ensemble à nervures 150 et gorges complémentaires 250 sur la vitre 100 et le boîtier 200 pour assurer la rigidification du tableau de bord.

De préférence, les nervures 150 sont prévues sur la vitre avant 100 tandis que les gorges complémentaires 250 sont prévues sur la bordure du boîtier 200 pour assurer la rigidification du tableau de bord ainsi obtenu.

Ces nervures 150 et gorges 250 s'étendent chacune sur un secteur limité de la périphérie de la vitre avant 100 et de la bordure du boîtier 200 et s'étendent radialement. Ainsi, les gorges 250 débouchent à la fois radialement sur l'intérieur et sur l'extérieur de la bordure du boîtier 200. Et l'extension, en direction périphérique, des nervures 150, est complémentaire de celle des gorges 250.

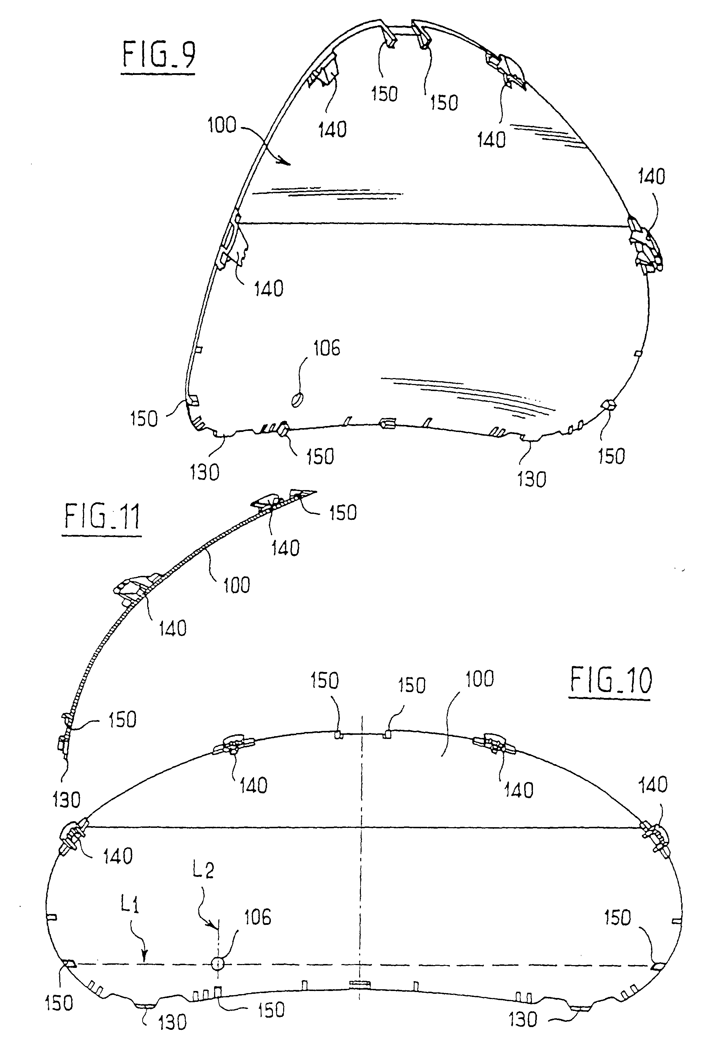

Plus précisément encore, selon un mode de réalisation préférentiel, la vitre avant 100 est munie d'un perçage 106 destiné à permettre un accès mécanique à des moyens de remise à zéro d'un organe d'affichage, par exemple un odomètre mécanique à tambours ou encore une montre. Et de préférence il est prévu trois ensemble de nervures 150 / gorges 250 complémentaires, disposés selon deux lignes L1, L2, schématisées sur la figure 10, orthogonales entres elles et sécantes au niveau de ce perçage 106. Ces lignes L1 et L2 sont généralement respectivement horizontale et verticale, en position d'utilisation du tableau de bord.

Ces structures 150 et 250 remplissent en sus de la fonction de rigidification, une fonction de centrage et d'alignement du perçage 106 sur les moyens mécaniques de remise à zéro précités. Le cas échéant le boîtier 100 peut d'ailleurs être muni d'un canon 206 guidant ces moyens et destinés à être alignés également sur ce passage 106.

Ces trois ensembles précités 150/250 comprennent chacun une nervure unique et une gorge unique complémentaire. Il est ainsi prévu une nervure 150 et une gorge 250 complémentaire selon la ligne L1, respectivement en partie inférieure de chaque bordure latérale du tableau de bord et un troisième ensemble comportant une nervure 150 et une gorge 250, au niveau de la bordure inférieure du tableau de bord, au droit du perçage 106, selon la ligne L2.

Par ailleurs dans le cadre du mode de réalisation préférentiel de la présente invention, il est de préférence prévu en outre un quatrième ensemble comportant des nervures 150 sur la vitre avant 100 et une gorge 250 complémentaire sur la bordure du boîtier 100, en partie supérieure du tableau de bord.

Cependant de préférence ce quatrième ensemble comprend deux nervures 150 parallèles entres elles sur la face arrière de la vitre avant 100 et une gorge 250, sur la bordure supérieure du boîtier 100, dont l'ouverture correspond à l'encombrement externe des deux nervures 150 précitées.

Cette disposition permet de rigidifier le tableau de bord une fois assemblé, même si celui-ci est réalisé à l'aide d'un boîtier 200 présentant en lui même peu de rigidité.

Le processus d'assemblage de la vitre avant 100 sur l'élément de boîtier 200 est illustré sur les figures 1 à 3.

Comme illustré sur la figure 2, dans un premier temps, les saillies 130 de la vitre avant 100 sont engagées dans les ouvertures 230 de l'élément de boîtier 200.

Puis comme illustré sur la figure 3, dans un second temps la vitre avant 100 est pivotée autour de ces saillies 130 pour porter les dentures élastiques 140 en prise avec les boucles complémentaires 240.

Au cours de ce processus les nervures 150 sont automatiquement engagées dans les gorges respectives complémentaires 250.

Bien entendu la présente invention n'est pas limitée au mode de réalisation particulier qui vient d'être décrit mais s'étend à toutes variantes conformes au cadre défini dans les revendications annexées.

Ainsi par exemple, on peut inverser la disposition des nervures 150 et gorges 250 complémentaires en plaçant les nervures 150 sur le boîtier 200 et les gorges complémentaires 250 sur la face arrière de la vitre avant 100.

## Revendications

1. Tableau de bord pour véhicule automobile comprenant un élément de boîtier (200), une vitre avant (100) et des moyens (130, 140, 230, 240) de fixation de la vitre avant (100) sur l'élément de boîtier (200), **caractérisé par le fait que** les moyens de fixation comprennent d'une part des moyens (130, 230) d'accrochage d'un premier bord (102) de la vitre avant (100) sur l'élément de boîtier (200) et d'autre part des moyens (140, 240) de clipsage du bord opposé (104) de la vitre avant (100) sur ledit élément de boîtier (200), l'élément de boîtier (200) étant réalisé en un matériau souple, et le tableau de bord comprenant en outre un ensemble à nervures (150) / gorges (250) complémentaires prévues sur la vitre avant (100) et sur la périphérie d'une jupe de l'élément de boîtier (200) pour assurer la rigidification du tableau.

2. Tableau selon la revendication 1, **caractérisé par le fait que** l'élément de boîtier (200) est réalisé en polypropylène chargé élastomère.

3. Tableau selon l'une des revendications 1 ou 2, **caractérisé par le fait qu'**il comprend des nervures (150) en saillie sur la surface arrière de la vitre avant (100), et des gorges complémentaires (250) ménagées sur la périphérie d'une jupe de l'élément de boîtier (200).

4. Tableau selon l'une des revendications 1 ou 2, **caractérisé par le fait qu'**il comprend des gorges sur la face arrière de la vitre avant (100) et des nervures complémentaires ménagées sur la périphérie d'une jupe de l'élément de boîtier (200).

5. Tableau selon l'une des revendications 1 à 4, **caractérisé par le fait que** les moyens de fixation (130, 140) sont prévus en périphérie de la vitre avant (100).

6. Tableau selon l'une des revendications 1 à 5, **caractérisé par le fait que** le boîtier (200) comporte un caisson (210) globalement parallélépipédique surmonté vers l'avant d'une jupe périphérique (220) de hauteur variable.

7. Tableau selon la revendication 6, **caractérisé par le fait que** les moyens de fixation (230, 240) sont prévus sur la bordure de la jupe (220)

8. Tableau selon l'une des revendications 1 à 7, **caractérisé par le fait que** les moyens d'accrochage (130/230) sont prévus en partie inférieure du tableau de bord et les moyens de clipsage (140/240) sont prévus en partie supérieure du tableau de bord.

9. Tableau selon l'une des revendications 1 à 8, **caractérisé par le fait que** les moyens d'accrochage sont formés d'une ouverture (230) dans le bord avant d'une jupe (220) du boîtier (200) et d'une saillie complémentaire (130) formée sur la bordure de la vitre avant (100).

10. Tableau selon l'une des revendications 1 à 9, **caractérisé par le fait que** les moyens de clipsage (140, 240) sont formés d'une boude (240) sur la bordure d'une jupe (220) du boîtier (200) et d'une denture élastique complémentaire (140) sur la périphérie de la vitre avant (100).

11. Tableau selon l'une des revendications 1 à 10, **caractérisé par le fait qu'**il comprend deux moyens d'accrochage (130, 230).

12. Tableau selon l'une des revendications 1 à 11, **caractérisé par le fait qu'**il comprend quatre moyens de clipsage (140, 240) sensiblement équiréparties sur la bordure supérieure du tableau de bord et en partie supérieure des bordures latérales de celui-ci.

13. Tableau selon l'une des revendications 1 à 12, **caractérisé par le fait que** la vitre avant (100) est munie d'un perçage (106) destiné à permettre un accès mécanique à des moyens de remise à zéro d'un organe d'affichage et il est prévu trois ensemble de nervures (150) / gorges (250) complémentaires sur la vitre avant (100) et sur l'élément de boîtier (200), disposés selon deux lignes L1, L2, orthogonales entres elles et sécantes au niveau de ce perçage 106.

14. Tableau selon la revendication 13, **caractérisé par le fait que** les trois ensembles (150/250) comprennent chacun une nervure unique et une gorge unique complémentaire.

15. Tableau selon l'une des revendications 13 ou 14, **caractérisé par le fait qu'**il comprend une nervure (150) et une gorge (250) complémentaire selon une ligne L1, respectivement en partie inférieure de chaque bordure latérale du tableau de bord et un troisième ensemble comportant une nervure (150) et une gorge (250), au niveau de la bordure inférieure du tableau de bord, au droit du perçage (106), selon une seconde ligne L2 orthogonale à la première.

16. Tableau selon l'une des revendications 1 à 15, **caractérisé par le fait qu'**il comprend un ensemble comportant des nervures (150) sur la vitre avant (100) et une gorge (250) complémentaire sur la bordure du boîtier (100), en partie supérieure du tableau de bord.

17. Tableau selon la revendication 16, **caractérisé par le fait que** l'ensemble prévu en partie supérieure du tableau de bord, comprend deux nervures (150) parallèles entres elles sur la face arrière de la vitre avant (100) et une gorge (250), sur la bordure supérieure du boîtier (100), dont l'ouverture correspond à l'encombrement externe des deux nervures (150) précitées.

18. Tableau selon l'une des revendications 1 à 17, **caractérisé par le fait que** la vitre avant (100) est formée d'une plaque en matériau plastique optiquement transparent, de contour général oval, concave vers l'extérieur du boîtier (200).

19. Tableau selon l'une des revendications 1 à 18, **caractérisé par le fait que** la vitre avant (100) est réalisée en polymétacrylate de méthyle.

20. Tableau selon l'une des revendications 1 à 19, **caractérisé par le fait que** les nervures (150) et gorges (250) complémentaires s'étendent chacune sur un secteur limité de la vitre avant (100) et de la bordure du boîtier (200) et s'étendent radialement.

## Claims

1. A motor vehicle dashboard comprising a housing element (200), a front-glass (100), and fixing means (130, 140, 230, 240) for fixing the front glass (100) on the housing element (200), the dashboard being **characterized by** the fact that the fixing means comprise firstly connection means (130, 230) for connecting a first edge (102) of the front glass (100) on the housing element (200), and secondly snap-fastening means (140, 240) for snap-fastening the opposite edge (104) of the front glass (100) on said housing element (200), the housing element (100) being made of a flexible material, and the dashboard further comprising a set of complementary projections (150) and notches (250) provided on the front glass (100) and on the periphery of a skirt of the housing element (200) to stiffen the dashboard.

2. A dashboard according to claim 1, **characterized by** the fact that the housing element (200) is made of elastomer-filled polypropylene.

3. A dashboard according to claim 1 or claim 2, **characterized by** the fact that it has projections (150) projecting from the rear surface of the front glass (100) and complementary notches (250) formed in the periphery of the skirt of the housing element (200).

4. A dashboard according to claim 1 or claim 2, **characterized by** the fact that it includes notches in the rear face of the front glass (100) and complementary projections formed on the periphery of a skirt of the housing element (200).

5. A dashboard according to any one of claims 1 to 4, **characterized by** the fact that the fixing means (130, 140) are provided at the periphery of the front glass (100).

6. A dashboard according to any one of claims 1 to 5, **characterized by** the fact that the housing (200) comprises a generally rectangular box (210) surmounted towards the front by a peripheral skirt (220) of varying height.

7. A dashboard according to claim 6, **characterized by** the fact that the fixing means (230, 240) are provided at the margins of the skirt (220).

8. A dashboard according to any one of claims 1 to 7, **characterized by** the fact that the connection means (130, 230) are provided in the bottom portion of the dashboard and the snap-fastening means (140, 240) are provided in the top portion of the dashboard.

9. A dashboard according to any one of claims 1 to 8, **characterized by** the fact that the connection means are formed by an opening (230) in the front edge of a skirt (220) of the housing (200) and by a complementary projection (130) formed on the margin of the front glass (100).

10. A dashboard according to any one of claims 1 to 9, **characterized by** the fact that the snap-fastening means (140, 240) are formed by a loop (240) on the margin of a skirt (220) of the housing (200) and by a complementary resilient tooth (140) on the periphery of the front glass (100).

11. A dashboard according to any one of claims 1 to 10, **characterized by** the fact that it has two connection means (130, 230).

12. A dashboard according to any one of claims 1 to 11, **characterized by** the fact that it has four snap-fastening means (140, 240) that are substantially uniformly distributed around the top margin of the dashboard and in the top portions of the side margins thereof.

13. A dashboard according to any one of claims 1 to 12, **characterized by** the fact that the front glass (100) is provided with a hole (106) giving mechanical access to means for resetting a display member, and three sets of projections (150) and complementary notches (250) are provided on the front glass (100) and on the housing element (200) in two mutually orthogonal lines L1, L2 intersecting at the hole (106).

14. A dashboard according to claim 13, **characterized by** the fact that each of the three sets (150/250) comprises a single projection and a single complementary notch.

15. A dashboard according to claim 13 or claim 14, **characterized by** the fact that it has a projection (150) and a complementary notch (250) on a line L1, respectively in the bottom proton of each side margin of the dashboard, and a third set comprising a projection (150) and a groove (250) in the bottom margin of the dashboard, in register with the hole (106) on a second line L2 orthogonal to the first.

16. A dashboard according to any one of claims 1 to 15, **characterized by** the fact that it includes an assembly comprising projections (150) on the front glass (100) and a complementary notch (250) in the margin of the housing (100) in the top portion of the dashboard.

17. A dashboard according to claim 16, **characterized by** the fact that the assembly provided in the top portion of the dashboard comprises at least two mutually parallel projections (150) on the rear face of the front glass (100) and a notch (250) in the top margin of the housing (100), the opening of the notch corresponding to the outside dimensions across the two above-mentioned projections (150).

18. A dashboard according to any one of claims 1 to 17, **characterized by** the fact that the front glass (100) is formed by a plate of optically transparent plastics material of generally oval outline that is concave towards the outside of the housing (200).

19. A dashboard according to any one of claims 1 to 18, **characterized by** the fact that the front glass (100) is made of polymethylmethacrylate.

20. A dashboard according to any one of claims 1 to 19, **characterized by** the fact that the complementary projections (150) and notches (250) extend over a limited sector of the front glass, and of the margin of the housing (200), and extend radially.

## Patentansprüche

1. Armaturenbrett für ein Kraftfahrzeug, umfassend ein Gehäuseelement (200), eine vordere Sichtscheibe (100) und Mittel (130, 140, 230, 240) zur Befestigung der vorderen Sichtscheibe (100) am Gehäuseelement (200), **dadurch gekennzeichnet, dass** die Befestigungsmittel einerseits Mittel (130, 230) zum Halten eines ersten Rands (102) der vorderen Sichtscheibe (100) am Gehäuseelement (200) und andererseits Mittel (140, 240) zum Einrasten des gegenüberliegenden Rands (104) der vorderen Sichtscheibe (100) an dem Gehäuseelement (200) umfassen, wobei das Gehäuseelement (200) aus einem biegsamen Material ausgeführt ist und das Armaturenbrett auβerdem eine Gruppe von komplementären Vorsprüngen (150) / Ausnehmungen (250) umfasst, die an der vorderen Sichtscheibe (100) und am Umfang eines Mantels des Gehäuseelements (200) vorgesehen sind, um die Versteifung des Armaturenbretts sicherzustellen.

2. Armaturenbrett nach Anspruch 1, **dadurch gekennzeichnet, dass** das Gehäuseelement (200) aus elastomergefülltem Polypropylen ausgeführt ist.

3. Armaturenbrett nach einem der Ansprüche 1 oder 2, **dadurch gekennzeichnet, dass** es Vorsprünge (150), die aus der Rückseite der vorderen Sichtscheibe (100) herausragen und komplementäre Ausnehmungen (250), die am Umfang eines Mantels des Gehäuseelements (200) vorgesehen sind, umfasst.

4. Armaturenbrett nach einem der Ansprüche 1 oder 2, **dadurch gekennzeichnet, dass** es Ausnehmungen an der Rückseite der vorderen Sichtscheibe (100) und komplementäre Vorsprünge, die am Umfang eines Mantels des Gehäuseelements (200) vorgesehen sind, umfasst.

5. Armaturenbrett nach einem der Ansprüche 1 bis 4, **dadurch gekennzeichnet, dass** es Befestigungsmittel (130, 140) umfasst, die am Umfang der vorderen Sichtscheibe (100) vorgesehen sind.

6. Armaturenbrett nach einem der Ansprüche 1 bis 5, **dadurch gekennzeichnet, dass** das Gehäuse (200) einen im wesentlichen parallelepipedischen Kasten (210) aufweist, der zur Vorderseite eines Umfangsmantels (220) von unterschiedlicher Höhe hin angebracht ist,.

7. Armaturenbrett nach Anspruch 6, **dadurch gekennzeichnet, dass** die Befestigungsmittel (230, 240) am Rand des Mantels (220) vorgesehen sind.

8. Armaturenbrett nach einem der Ansprüche 1 bis 7, **dadurch gekennzeichnet, dass** die Haltemittel (130/230) am niedrigen Bereich des Armaturenbretts vorgesehen sind und die Mittel zum Einrasten (140/240) am höheren Bereich des Armaturenbretts vorgesehen sind.

9. Armaturenbrett nach einem der Ansprüche 1 bis 8, **dadurch gekennzeichnet, dass** die Haltemittel durch eine Öffnung (230) im vorderen Rand eines Mantels (220) des Gehäuses (200) und einen komplementären Vorsprung (130) am Rand der vorderen Sichtscheibe (100) gebildet werden.

10. Armaturenbrett nach einem der Ansprüche 1 bis 9, **dadurch gekennzeichnet, dass** die Einrastmittel (140, 240) durch eine Lasche (240) am Rand eines Mantels (220) des Gehäuses (200) und einen komplementären elastischen Zahn (140) am Umfang der vorderen Sichtscheibe (100) gebildet werden.

11. Armaturenbrett nach einem der Ansprüche 1 bis 10, **dadurch gekennzeichnet, dass** es zwei Haltemittel (130, 230) umfasst.

12. Armaturenbrett nach einem der Ansprüche 1 bis 11, **dadurch gekennzeichnet, dass** es vier Mittel zum Einrasten (140, 240) umfasst, die annähernd gleichmäßig am höheren Rand des Armaturenbretts und im höheren Bereich seiner Seitenränder verteilt sind.

13. Armaturenbrett nach einem der Ansprüche 1 bis 12, **dadurch gekennzeichnet, dass** die vordere Sichtscheibe (100) mit einer Öffnung (106) versehen ist, die Mitteln zum Nullstellen eines Anzeigeorgans einen mechanischen Zugang erlauben, wobei drei Gruppen von komplementären Vorsprüngen (150) / Ausnehmungen (250) auf der vorderen Sichtscheibe (100) und auf dem Gehäuseelement (200) vorgesehen sind, die entlang von zwei Linien L1, L2 verlaufen, welche zueinander senkrecht sind und sich im Niveau der Öffnung (106) schneiden.

14. Armaturenbrett nach Anspruch 13, **dadurch gekennzeichnet, dass** die drei Gruppen (150/250) jeweils einen einzigen Vorsprung und eine einzige komplementäre Ausnehmung umfassen.

15. Armaturenbrett nach einem der Ansprüche 13 oder 14, **dadurch gekennzeichnet, dass** es einen Vorsprung (150) und eine komplementäre Ausnehmung (250) entlang einer Linie 1 bzw. im niedrigen Bereich jedes Seitenrands des Armaturenbretts umfasst und eine dritte Gruppe mit einem Vorsprung (150) und einer Ausnehmung (250) auf dem Niveau des niedrigen Rands des Armaturenbretts bei der Öffnung (106), entlang einer Linie L2, senkrecht zur ersten.

16. Armaturenbrett nach einem der Ansprüche 1 bis 15, **dadurch gekennzeichnet, dass** es eine Gruppe umfasst, die Vorsprünge (150) auf der vorderen Sichtscheibe (100) aufweist und eine komplementäre Ausnehmung (250) am Rand des Gehäuses (100) im höheren Bereich des Armaturenbretts.

17. Armaturenbrett nach Anspruch 16, **dadurch gekennzeichnet, dass** die Gruppe, die im höheren Bereich des Armaturenbretts vorgesehen ist, zwei zueinander paralelle Vorsprünge (150) auf der Rückseite der vorderen Sichtscheibe (100) umfasst und eine Ausnehmung (250) am oberen Rand des Gehäuses (100), deren Öffnung mit der äußeren Abmessung der beiden Vorsprünge (150) korrespondiert.

18. Armaturenbrett nach einem der Ansprüche 1 bis 17, **dadurch gekennzeichnet, dass** die vordere Sichtscheibe (100) aus einer durchsichtigen Kunststoffplatte gebildet wird, die eine. im wesentlichen ovale Kontur hat und zum Äußeren des Gehäuses (200) konkav ist.

19. Armaturenbrett nach einem der Ansprüche 1 bis 18, **dadurch gekennzeichnet, dass** die vordere Sichtscheibe (100) aus Methyl-Polymetacrylat gefertigt ist.

20. Armaturenbrett nach einem der Ansprüche 1 bis 19, **dadurch gekennzeichnet, dass** die Vorsprünge (150) und komplementären Ausnehmungen (250) sich jeweils auf einem begrenzten Bereich der vorderen Sichtscheibe (100) und des Rands des Gehäuses (200) erstrecken und sich radial erstrecken.
